(19) Europäisches Patentamt
European Patent Office
Office européen des brevets

(11) **EP 0 721 692 B1**

(12) **EUROPÄISCHE PATENTSCHRIFT**

(45) Veröffentlichungstag und Bekanntmachung des Hinweises auf die Patenterteilung:
**04.06.1997 Patentblatt 1997/23**

(21) Anmeldenummer: **94928813.8**

(22) Anmeldetag: **26.09.1994**

(51) Int Cl.⁶: **H02M 3/335**

(86) Internationale Anmeldenummer:
**PCT/EP94/03198**

(87) Internationale Veröffentlichungsnummer:
**WO 95/09476 (06.04.1995 Gazette 1995/15)**

(54) **SPERRWANDLER**

FLY BACK CONVERTER

CONVERTISSEUR INDIRECT

(84) Benannte Vertragsstaaten:
**AT CH DE FR GB IT LI**

(30) Priorität: **27.09.1993 AT 1946/93**

(43) Veröffentlichungstag der Anmeldung:
**17.07.1996 Patentblatt 1996/29**

(73) Patentinhaber: **Siemens Aktiengesellschaft Österreich**
**1210 Wien (AT)**

(72) Erfinder:
• **WEINMEIER, Harald**
**A-1210 Wien (AT)**
• **SCHOBER, Eduard**
**A-2481 Achau (AT)**

(74) Vertreter: **Fuchs, Franz-Josef, Dr.-Ing.**
**Postfach 22 13 17**
**80503 München (DE)**

(56) Entgegenhaltungen:
**EP-A- 0 498 917**

• **RGE REVUE GENERALE DE L'ELECTRICITE, Nr.5, Mai 1992, PARIS, Seiten 117 - 123, XP290747; LHERMITE: 'Un controleur d'alimentation fly-back avec controle efficace des surcharges'**
• **PATENT ABSTRACTS OF JAPAN, vol. 16, no. 432 (E-1262), 9. September 1992 & JP-A-04 150 763 (TOYO ELECTRIC), 25. Mai 1992**

EP 0 721 692 B1

**Beschreibung**

Aus der EP 0 498 917 ist ein taktgesteuerter Umrichter mit Strombegrenzung bekannt. Dabei handelt es sich um einen Umrichter vom Typ „Durchflußwandler". Dieser enthält eine erste Vorrichtung zur Strombegrenzung durch stromabhangige zeitliche Verkürzung der Einschaltimpulse, welche im Bereich üblicher Werte des zu begrenzenden Stromes wirksam ist. Ferner ist eine weitere Vorrichtung zur Strombegrenzung vorhanden, welche erst im oberen Bereich des zu begrenzenden Stromes wirksam ist und abhängig von einer Ausgangsgleichspannung bewirkt, daß die Schaltfrequenz, mit der die Einschaltimpulse aufeinander folgen, mit wachsendem Strom kleiner wird.

Die Erfindung bezieht sich auf einen Sperrwandler mit einem Übertrager, der eine Primärwicklung und zumindest eine Sekundärwicklung aufweist, mit einem über eine Ansteuerschaltung gesteuerten Schalter, über den die Primärwicklung an einer Eingangsgleichspannung liegt, mit einem der Sekundärwicklung nachgeschalteten Gleichrichter und Ladekondensator zur Erzeugung einer Ausgangsgleichspannung und mit einem Stromfühler für den Strom durch die Primärwicklung, wobei das Tastverhältnis des Ansteuersignals des gesteuerten Schalters einerseits von der Regelabweichung der Ausgangsgleichspannung von ihrem Sollwert und andererseits von dem Ausgangssignal des Stromfühlers abhängt.

Sperrwandler dieser Art werden mit fester Taktfrequenz betrieben, jedoch wird das Tastverhältnis in Abhängigkeit von der Ausgangsgleichspannung geregelt. Hierzu wird eine dem Strom durch die Primarwicklung proportionale Spannung eines Stromsensors, üblicherweise eines niederohmigen Meßwiderstandes, mit der Regelabweichung der Ausgangsgleichspannung verglichen. Sobald der Strom durch die Primärwicklung den durch die genannte Regelabweichung bestimmten Wert überschreiten, wird der gesteuerte Schalter geöffnet. Es ergibt sich ein dreieckförmiger Stromverlauf durch die Primärwicklung. Ein Ansteigen bzw. Absinken der Ausgangsgleichspannung wird durch Verringern oder Vergrößern des Tastverhältnisses des Stromes durch die Primarwicklung ausgeregelt.

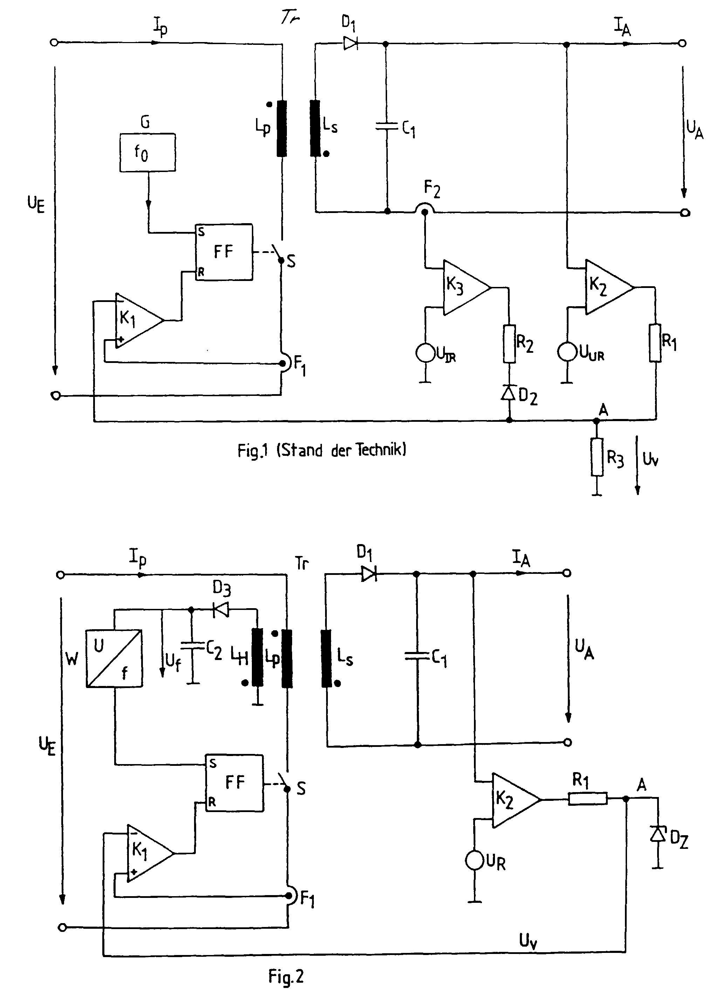

Um bei Überlast oder Kurzschluß eine Begrenzung des Ausgangsgleichstromes zu ermöglichen, wird bei bekannten Ausführungen festfrequenter Sperrwandler der Ausgangsstrom mittels eines Meßwiderstandes gemessen, der gemessene Istwert mit einem Sollwert verglichen und die aus diesem Vergleich resultierende Abweichung der Regelabweichung der Ausgangsgleichspannung überlagert, sobald der Ausgangsstrom einen bestimmten Wert überschreitet. Dies führt dann gleichfalls zu einer Verringerung des Tastverhältnisses und demgemäß zu einer Strombegrenzung. Eine Prinzipschaltung nach diesem Stand der Technik ist in Fig. 1 gezeigt. Diese Lösung zur Strombegrenzung ist relativ aufwendig, sie erfordert einen eigenen Stromregler und einen hochbelastbaren, vergleichsweise teuren Meßwiderstand $R_2$ für die Messung des Ausgangsgleichstroms $I_A$.

Freischwingende Sperrwandler sind - im Gegensatz zu festfrequenten Sperrwandlern - zwar einfach mit selbsttätiger Strombegrenzung ausführbar. Dennoch sind die bekannten Nachteile freischwingender Sperrwandler, wie z.B. schlechte Leerlauffestigkeit, nicht definierte EMV-verhältnisse und dgl., bei den meisten Anwendungsfällen jedoch untragbar.

Es ist demnach eine Aufgabe der Erfindung, einen Sperrwandler der oben beschriebenen Art zu schaffen, der alle Vorteile eines festfrequenten Sperrwandlers aufweist und bei dem eine Strombegrenzung auf einfache und kostengünstige Art durchführbar ist.

Diese Aufgabe wird mit einem Sperrwandler der eingangs genannten Art erfindungsgemäß dadurch gelöst, daß ein Maximalwert für den Sollwert des Primärstromes festgelegt ist, bis zu welchem eine Regelung der Ausgangsgleichspannung erfolgen kann, und daß die Taktfrequenz des Ansteuersignals des gesteuerten Schalters direkt proportional zu der Ausgangsgleichspannung änderbar ist.

Wie weiter unten noch näher erläutert, führt diese Lösung im Fall einer eine Strombegrenzung erfordernden Überlast vorteilhaft zu einer Verringerung der Schaltfrequenz und auf diese Weise zu der geforderten Strombegrenzung.

Weitere Merkmale der Erfindung sind in den Unteransprüchen gekennzeichnet.

Die Erfindung samt weiterer Vorteile sind im Folgenden anhand beispielsweiser Ausführungsformen näher erläutert, die in der Zeichnung veranschaulicht sind. In dieser zeigen

Fig. 1          die Prinzipschaltung eines Sperrwandlers nach dem Stand der Technik,

Fig. 2 und Fig. 3       die Prinzipschaltbilder von zwei Ausführungsformen der Erfindung,

Fig. 4a bis Fig. 4c      in Diagrammen die Strom- und Spannungsverläufe bei einem erfindungsgemäßen Sperrwandler,

Fig. 5          eine Ausführungsform der Erfindung unter Verwendung einer handelsüblichen integrierten Schaltung,

Fig. 6          das Prinzipschaltbild dieser integrierten Schaltung, und

Fig.7 den Spannungsverlauf an einem Pin 4 in dieser Schaltung.

Der in Fig.1 gezeigte Sperrwandler nach dem Stand der Technik besitzt einen Übertrager $T_r$ mit einer Primärwicklung $L_P$ und einer Sekundärwicklung $L_S$, wobei die Primärwicklung $L_P$ über einen gesteuerten Schalter S an einer Eingangsgleichspannung $U_E$ liegt. Der Schalter S, z.B. ein n-Kanal-FET-Transistor, wird über eine Ansteuerschaltung gesteuert, welche im vorliegenden Fall ein Flip-Flop FF aufweist, desse: Ausgang den Schalter S steuert und an dessen set-Eingang eine Schaltspannung eines Taktgebers G mit konstanter Frequenz $f_o$ liegt. An den reset-Eingang des Flip-Flop FF ist der Ausgang eines Operationsverstärkers $K_1$ angeschlossen. Einem Eingang des Operationsverstärkers $K_1$ ist das Ausgangssignal eines Stromfühlers $F_1$ zugeführt und an dem anderen Eingang liegt eine Vergleichsspannung $U_V$, welche von den Ausgangsspannungen zweier Operationsverstärker $K_2$, $K_3$ abhängt.

Sekundärseitig sind der Sekundärspule $L_S$ ein Gleichrichter $D_1$ und ein Ladekondensator $C_1$ nachgeschaltet, an welchem die Ausgangsgleichspannung $U_A$ liegt. Die Ausgangsgleichspannung $U_A$ oder ein ihr proportionaler Teil wird in dem Operationsverstärker $K_2$ mit einer Referenzspannung $U_{UR}$ verglichen. Der mittels eines Stromfühlers $F_2$ gemessene Ausgangsstrom $I_A$ wird, bevorzugt in Form einer diesem Strom proportionalen Spannung, in dem Operationsverstärker $K_3$ mit einer weiteren Referenzspannung $U_{IR}$ verglichen. Die Ausgänge der Operationsverstärker $K_2$ und $K_3$ sind über einen Widerstand $R_1$ bzw. über die Serienschaltung eines Widerstandes $R_2$ und einer Diode $D_2$ an einem Schaltungspunkt A zusammengefaßt, der über einen Widerstand $R_3$ an einem festen Potential liegt, z.B. an Masse. An diesem Punkt A liegt die bereits genannte Vergleichsspannung $U_V$ für den einen Eingang des Operationsverstärkers $K_1$.

Diese in Fig.1 dargestellte Schaltung nach dem Stand der Technik arbeitet wie folgt:

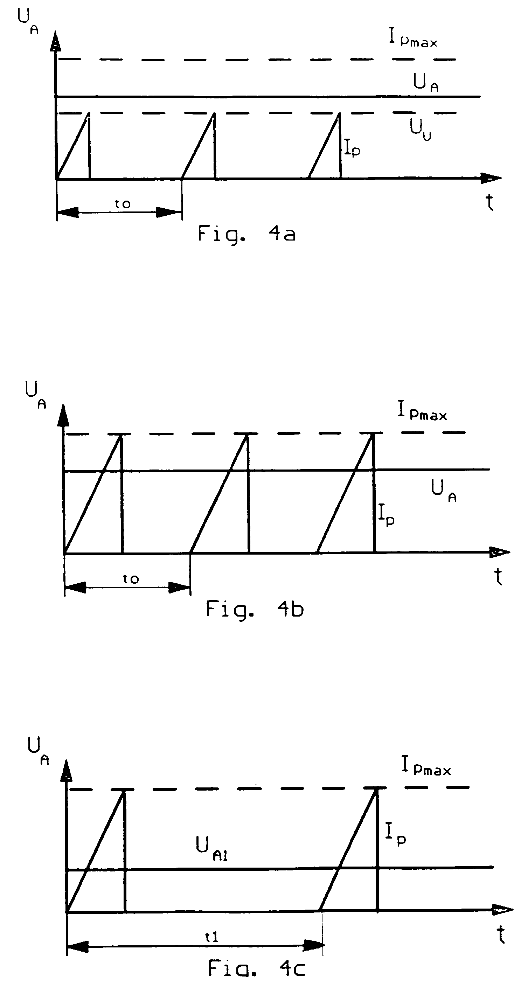

Ausgelöst durch ein Signal des Taktgebers G schließt das Flip-Flop FF den Schalter S und durch die Primärwicklung $L_P$ beginnt ein Strom $I_P$ im wesentlichen mit linearem Anstieg zu fließen (Fig.4a). Der Strom $I_P$ fließt solange, bis sein ihm proportionaler Spannungswert am Eingang des Operationsverstärkers $K_1$ den Wert der Vergleichsspannung $U_V$ erreicht. Bei Erreichen dieses Wertes wird das Flip-Flop FF durch den Operationsverstärker $K_1$ rückgesetzt und der Schalter $S_1$ geöffnet. Der Schalter $S_1$ wird nach einem Zeitraum von einer Periodendauer von $f_o$ nach seinem letzten Schließen wieder über den Generator G und das Flip-Flop FF geschlossen, so daß sich der in Fig.4a gezeigte dreieckförmige Stromverlauf ergibt.

Ein Sinken bzw. ein Steigen der Vergleichsspannung $U_V$ hat eine Verkleinerung bzw. eine Vergrößerung der Tastverhältnisse zur Folge hat, was zur Spannungsregelung (über Operationsverstärker $K_2$) bzw. zur Strombegrenzung (über Operationsverstärker $K_3$) ausgenützt wird. Im normalen Betrieb erfolgt eine Regelung der Ausgangsspannung $U_A$. Erst ab einem Maximalstrom $I_{Amax}$, der durch die Potentialverhältnisse am Ausgang des Operationsverstärkers $K_3$ und am Punkt A festgelegt ist, greift der Operationsverstärker $K_3$ in die Regelung ein und setzt das Tastverhältnis des Primärstromes $I_P$ soweit herab, daß trotz überhöhter Last nur der Strom $I_{Amax}$ fließt.

Die in Fig.2 gezeigte Schaltung nach der Erfindung baut auf der oben beschriebenen und in Fig.1 dargestellten Schaltung auf. Es werden nun die charakteristischen Unterschiede zwischen dem bekannten und dem erfindungsgemäßen Schaltungskonzept angeführt und erläutert, wobei zur besseren Übersicht gleiche Schaltelemente auch gleiche Bezugszeichen tragen.

Es wird als erfindungswesentlich angesehen, daß die Taktfrequenz f zur Strombegrenzung geändert bzw. nachgeführt wird. Hierzu kann vorteilhaft ein Spannungs-/Frequenz-Wandler W eingesetzt werden, dessen Eingang eine der Ausgangsspannung $U_A$ proportionale Eingangsspannung $U_f = k \cdot U_A$ zugeführt ist. Im vorliegenden Beispiel wird die Spannung $U_f$ vorteilhaft aus einer Hilfswicklung $L_H$ des Übertragers $T_r$ durch Gleichrichtung über eine Diode $D_3$ mit nachgeschaltetem Ladekondensator $C_2$ erzeugt. Die Spannung $U_f$ ist der Ausgangsgleichspannung $U_A$ gemäß dem Übersetzungsverhältnis der Wicklungen $L_S$ und $L_H$ direkt proportional.

Auf der Sekundärseite des Übertragers kann bei der erfindungsgemäßen Schaltung von Fig.2 vorteilhaft der Operationsverstärker $K_1$ gemeinsam mit dem Stromfühler $F_2$ zur Messung des Ausgangsstromes $I_A$ entfallen. Es ist somit lediglich der Operationsverstärker $K_2$ vorhanden, dessen Ausgang über den Widerstand $R_1$ mit dem Schaltungspunkt A verbunden ist. An diesem liegt eine Spannung $U_V$ an, welche in Fig.1 als Vergleichsspannung $U_V$ für den nun entfallenen Operationsverstärker $K_1$ diente. Diese ist (in positiver Richtung) durch eine Zenerdiode $D_Z$ begrenzt.

Die Schaltung gemäß der Erfindung arbeitet folgendermaßen:

Im Normalbetrieb ohne Überstrom bestimmt der Operationsverstärker $K_2$ über $U_V$ und $K_1$ das Tastverhältnis des gesteuerten Schalters S. Die Taktfrequenz f ist proportional zur Spannung $U_f$ am Ladekondensator $C_2$. Da im Normalbetrieb $U_A$ konstant ist, ist auch $U_f$ konstant und damit ist auch die Taktfrequenz f konstant, wobei $f=f_o$ ist.

Bei Erhöhung der Last, d.h. bei Zunahme des Primärstromes $I_P$, wird über die Regelung das Tastverhältnis erhöht, um die Ausgangsgleichspannung $U_A$ konstant zu halten. Bei Überschreiten eines Wertes $I_{Pmax}$ des Primärstromes $I_P$, wobei dieser Wert im vorliegenden Fall vorteilhaft durch eine Zenerdiode $D_Z$ bestimmt ist, tritt ein Strombegrenzungsbetrieb ein. Der Schalter S wird geöffnet, auch wenn über die Spannungsregelung ein größeres Tastverhältnis vorgegeben werden sollte.

Wegen

$$IP = \frac{U_E}{L} \cdot t_E$$

mit der Einschaltzeit $t_E$ des Schalters S und $I_P = O$ beim Einschaltzeitpunkt des Schalters S, wird ab einem gewissen Ausgangsstrom $I_A$ der eingestellte Wert $I_{Pmax}$ überschritten und die Einschaltzeit $t_E$ begrenzt. Damit ist auch die maximal übertragbare Leistung wegen

$$P_{max} = \frac{I_{Pmax}^2 \cdot L}{2} \cdot f$$

begrenzt. L bedeutet dabei die Hauptinduktivität des Übertragers $T_r$.

Bei weiterer Erhöhung der Last, d.h. bei weiterer Zunahme des Primärstromes $I_P$, sinkt die Ausgangsspannung $U_A$ und die Spannung $U_f$. Im gleichen Maß sinkt die Frequenz f, z.B. auf einen Wert $f_1$.

Damit sinkt $P_{max}$ proportional mit der Ausgangsspannung $U_A$. Wegen dieser Proportionalität und wegen

$$P_{max} = U_A \cdot I_{A\,max}$$

muß $I_{Amax}$ im Strombegrenzungsbetrieb eine Konstante sein, so daß im Strombegrenzungsbetrieb der Ausgangsstrom konstant, nämlich $I_{Amax}$, und unabhängig von der lastabhängigen Ausgangsspannung ist.

Fig. 4b zeigt den Verlauf von $I_P$ an der Grenze vom Normalbetrieb zum Strombegrenzungsbetrieb. Der Maximalstrom $I_{Pmax}$ ist erreicht und die Ausgangsspannung weist noch ihren Sollwert $U_{Asoll}$ auf.

Fig. 4c zeigt die Verhältnisse im Strombegrenzungsbetrieb, in dem $U_A$ unter den Sollwert auf $U_{A1}$ gefallen ist, wobei im vorliegenden Beispiel $U_{A1}$ mit $U_{A1} = U_{Asoll}/2$ eingezeichnet ist. Dementsprechend ist die Taktfrequenz abgesunken und auf $f_1 = f_o/2$ gefallen ($f_1 = 1/t_1$).

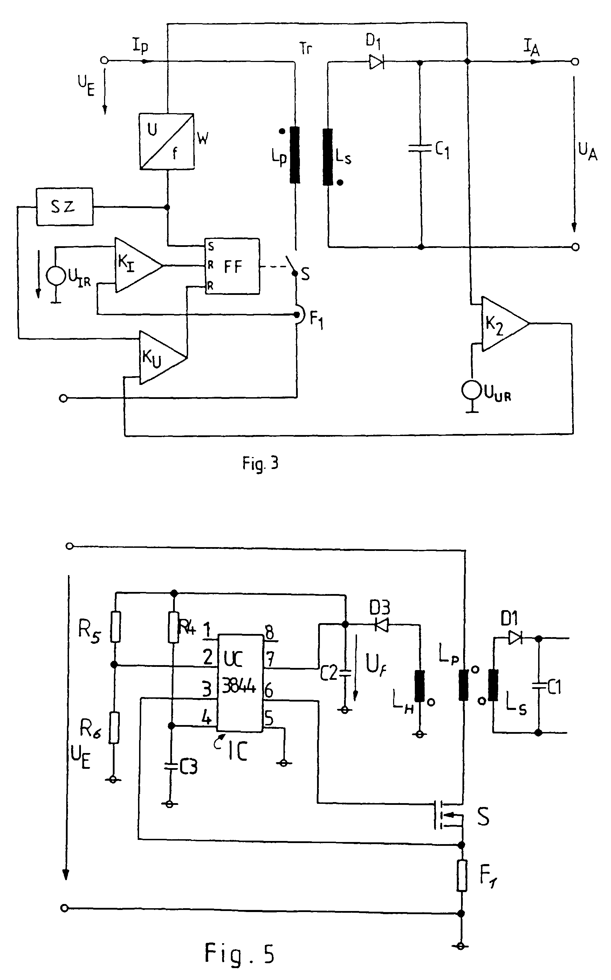

Eine mögliche Variante zur Ansteuerung des Schalters S ist in Fig. 3 dargestellt. Dem Spannungs-/Frequenz-Wandler W ist als Eingangsspannung die Ausgangsgleichspannung $U_A$ direkt zugeführt. Der Ausgang des Spannungs-/Frequenz-Wandlers W steuert einerseits das Flip-Flop FF an dessen set-Eingang und synchronisiert andererseits einen Sägezahngenerator SZ, welcher eine Sägezahn-Referenzspannung für einen Eingang eines Spannungskomparators bzw. Operationsverstärkers $K_U$ liefert. An dem anderen Eingang liegt die Ausgangsspannung des Operationsverstärkers $K_{2T}$, d.h. die Regelabweichung der Ausgangsgleichspannung $U_A$. Der Ausgang des Operationsverstärkers $K_U$ ist mit einem zweiten reset-Eingang des Flip-Flop FF verbunden.

Ein erster reset-Eingang des Flip-Flop FF liegt am Ausgang eines Stromkomparators bzw. Operationsverstärkers $K_I$, welcher das Ausgangssignal des Stromfühlers $F_1$ mit einer Referenzspannung $U_{IR}$ vergleicht, welche den Maximalstrom $I_{Pmax}$ repräsentiert.

Im normalen Betriebsfall erfolgt eine Regelung der Ausgangsgleichspannung $U_A$ über $K_2$ und $K_U$, wobei der Öffnungszeitpunkt des Schalters S durch den Schnittpunkt des Sägezahnsignals mit der Regelabweichung der Ausgangsgleichspannung bestimmt ist. Bei zu großer Last, d.h. bei Erreichen eines Maximalstromes $I_{Pmax}$, erfolgt ein Rücksetzen des Flip-Flop FF am ersten reset-Eingang über $K_I$ und es tritt der in Zusammenhang mit Fig.2 als Strombegrenzungsbetrieb beschriebene Fall ein, d.h. ein Vorrang der Strombegrenzung vor der Spannungsregelung und in der Folge eine Verringerung der Taktfrequenz f.

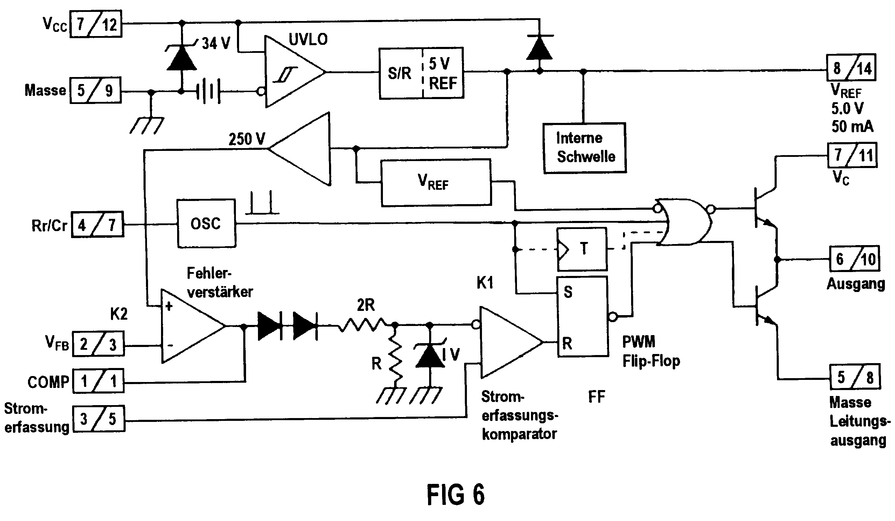

Fig.5 zeigt eine besonders zweckmäßige Realisierung der Erfindung unter Verwendung einer integrierten Schaltung, wobei im vorliegenden Fall ein IC der Firma Unitrode, UC 3844, "Current Mode PWW Controller" eingesetzt ist. Die Innenschaltung dieses IC ist als Blockdiagramm aus Fig.6 ersichtlich. Selbstverständlich können äquivalente Typen dieser Firma oder anderer Firmen Verwendung finden.

Im Prinzip wird die Schaltung nach Fig.2 realisiert. Der IC enthält die Operationsverstärker $K_1$ und $K_2$ sowie das Flip-Flop $F_f$ ( siehe Blockschaltbild in Fig.6). Die Regelung der Ausgangsspannung erfolgt über die an der Hilfswicklung $L_H$ liegenden Spannung $U_f$, die der Ausgangsspannung $U_A$ direkt proportional ist. Spannungsteilerwiderstände $R_5/R_6$ erzeugen eine geeignete Eingangsspannung für den Operationsverstärker $K_2$ an Pin 2.

Der Oszillator des IC wird - im Gegensatz zu bisher bekannten Applikationsschaltungen - als Grundbaustein des Spannungs-/ Frequenz-Wandlers verwendet. Bei den bisherigen Schaltungen wurde der Oszillator mit einer festen Frequenz beschaltet oder auf eine fremde Taktfrequenz synchronisiert.

Der Oszillatoreingang am Pin 4 führt über einen Widerstand $R_4$ zum Kondensator $C_2$, d.h. zu $U_f$ und über einen Kondensator $C_3$ liegt Pin 4 an Masse. Das Prinzip des Oszillators liegt darin, daß bei Überschreiten eines oberen Schwellenwertes an Pin 4 ein hoher negativer Strom an Pin 4 eingeschaltet wird. Dieser Strom wird nach Unterschreiten des unteren Schwellenwertes wieder abgeschaltet, gleichzeitig wird das Flip-Flop FF gesetzt und eine neue Taktperiode beginnt.

Die Schaltung nach Fig.5 an Pin 4 ergibt nun näherungsweise einen Spannungs-/Frequenz-Wandler. Der Kondensator $C_3$ wird über den Widerstand $R_4$ aufgeladen. Bei Erreichen des oberen Schwellenwertes $U_{SO}$ wird der Kondensator $C_3$ sehr rasch entladen und die Taktperiode beginnt erneut. Der Strom durch $R_4$ ist annähernd proportional zu $U_f$ (und zu $U_A$) und damit ist es auch der Spannungsanstieg im Kondensator $C_3$. Somit ist die Periodendauer ($1/f$) annähernd indirekt proportional zur Ausgangsspannung.

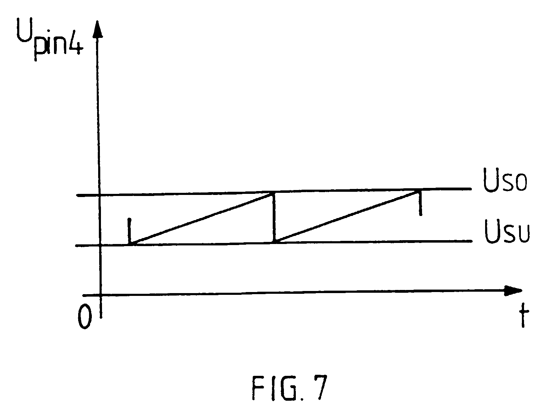

Der Spannungsverlauf an Pin 4 des IC von Fig.6 ist in Fig.7 dargestellt.

**Patentansprüche**

1. Sperrwandler mit einem Übertrager ($T_r$), der eine Primärwicklung ($L_P$) und zumindest eine Sekundärwicklung ($L_S$) aufweist, mit

   a) einem über eine Ansteuerschaltung (FF, $K_1$) gesteuerten Schalter (S), über den die Primärwicklung ($L_P$) an einer Eingangsgleichspannung ($U_E$) anliegt,

   b) einem der Sekundärwicklung ($L_S$) nachgeschalteten Gleichrichter ($D_1$) und einem Ladekondensator ($C_1$) zur Erzeugung einer Ausgangsgleichspannung ($U_A$),

   c) einem Stromfühler ($F_1$) für den Primärstrom (Ip) durch die Primärwicklung ($L_P$), wobei das Tastverhältnis des Ansteuersignals des gesteuerten Schalters (S) einerseits von der Regelabweichung ($U_V$) der Ausgangsgleichspannung ($U_A$) von einem Sollwert ($U_{Asoll}$) und andererseits von dem Ausgangssignal des Stromfühlers ($F_1$) abhängt, und

   d) ein Maximalwert ($I_{pmax}$) für den Sollwert des Primärstromes ($I_P$) festgelegt ist, bis zu welchem eine Regelung der Ausgangsgleichspannung ($U_A$) erfolgt, und

   e) die Ansteuerschaltung (FF, $K_1$) einen Spannungs-/Frequenz-Wandler (W) aufweist, dem eine der Ausgangsgleichspannung ($U_A$) proportionale Spannung zugeführt wird, so daß bei Erreichen des Maximalwertes ($I_{pmax}$) des Primärstromes ($I_P$) und weiterer Erhöhung der Last die Taktfrequenz (f) des Ansteuersignals des gesteuerten Schalters (S) direkt proportional zur Ausgangsgleichspannung ($U_A$) reduziert wird.

2. Sperrwandler nach Anspruch 1, **dadurch gekennzeichnet,** daß zur Gewinnung einer der Ausgangsgleichspannung ($U_A$) proportionalen Spannung der Übertrager ($T_r$) eine Hilfswicklung ($L_H$) aufweist, welcher ein Gleichrichter ($D_3$) und ein Kondensator ($C_2$) nachgeschaltet sind.

3. Sperrwandler nach Anspruch 1 oder 2, **dadurch gekennzeichnet**, daß die Ansteuerschaltung ein Flip-Flop (FF) aufweist, das dem gesteuerten Schalter (S) vorangeschaltet ist, und dessen set-Eingang mit dem Ausgang des Spannungs-/Frequenz-Wandlers (W) verbunden ist.

4. Sperrwandler nach Anspruch 3, **dadurch gekennzeichnet,** daß die Ansteuerschaltung einen Operationsverstärker ($K_1$) aufweist, dessen einem Eingang das Ausgangssignal des Stromfühlers ($F_1$) und dessen anderem Eingang die Regelabweichung ($U_V$) der Ausgangsgleichspannung ($U_A$) zugeführt werden, und dessen Ausgang mit einem reset-Eingang des Flip-Flop (FF) verbunden ist.

5. Sperrwandler nach Anspruch 3, **dadurch gekennzeichnet,** daß die Ansteuerschaltung einen Stromkomparator ($K_I$) aufweist, dessen einem Eingang ein einen Maximalstrom ($I_{pmax}$) repräsentierendes Referenzsignal ($U_{IR}$) und dessen anderem Eingang das Ausgangssignal des Stromfühlers ($F_1$) zugeführt ist, und dessen Ausgang mit einem ersten reset-Eingang des Flip-Flop (FF) verbunden ist, und daß die Ansteuerschaltung weiters einen Spannungskomparator ($K_U$) aufweist, dessen einem Eingang das die Taktfrequenz (f) aufweisende Ausgangssignal eines Sägezahngenerators (SZ) zugeführt ist, dessen anderem Eingang die Regelabweichung der Ausgangsgleichspannung ($U_A$) zugeführt ist und dessen Ausgang mit einem zweiten reset-Eingang des Flip-Flop (FF) verbunden ist.

6. Sperrwandler nach den Ansprüchen 1, 3 und 4, **dadurch gekennzeichnet,** daß zumindest das Flip-Flop (FF) und der Komparator ($K_1$) sowie ein gesteuerter Oszillator (OSC) in einer integrierten Schaltung (IC) des Typs UC 3844 (Unitrode) oder eines äquivalenten Typs enthalten sind, wobei der Steuereingang (Pin 4) des Oszillators einerseits über einen Widerstand ($R_4$) an die Ausgangsgleichspannung ($U_A$) bzw. an die zu dieser proportionalen Spannung

($U_f$) der Hilfswicklung ($L_H$) gelegt und andererseits über einen Kondensator ($C_3$) gegen Masse geschaltet ist.

## Claims

1. Flyback converter having a transformer ($T_r$) which has a primary winding ($L_P$) and at least one secondary winding ($L_S$), having

   a) a switch (S) controlled by way of a trigger circuit (FF, $K_1$), by way of which switch an input direct voltage ($U_E$) is applied to the primary winding ($L_P$),
   b) a rectifier ($D_1$), which is connected downstream of the secondary winding ($L_S$), and a charging capacitor ($C_1$) for generating an output direct voltage ($U_A$),
   c) a current sensor ($F_1$) for the primary current ($I_P$) through the primary winding ($L_P$), with the duty factor of the trigger signal of the controlled switch (S) depending on the one hand on the deviation ($U_V$) of the output direct voltage ($U_A$) from a desired value ($U_{Asoll}$) and on the other hand on the output signal of the current sensor ($F_1$), and
   d) a maximum value ($I_{Pmax}$) is established for the desired value of the primary current ($I_P$), up to which maximum value regulation of the output direct voltage ($U_A$) takes place, and
   e) the trigger circuit (FF, $K_1$) has a voltage/frequency converter (W), to which is supplied a voltage which is proportional to the output direct voltage ($U_A$), so that when the maximum value ($I_{Pmax}$) of the primary current ($I_P$) and a further increase in the load are achieved, the clock frequency (f) of the trigger signal of the controlled switch (S) is reduced in direct proportion to the output direct voltage ($U_A$)

2. Flyback converter according to claim 1, characterised in that in order to obtain a voltage which is proportional to the output direct voltage ($U_A$), the transformer ($T_r$) has an auxiliary winding ($L_H$), to which are subsequently connected a rectifier ($D_3$) and a capacitor ($C_2$).

3. Flyback converter according to claim 1 or 2, characterised in that the trigger circuit has a flip-flop (FF), which is connected upstream of the controlled switch (S) and the set input of which is connected to the output of the voltage/frequency converter (W).

4. Flyback converter according to claim 3, characterised in that the trigger circuit has an operational amplifier ($K_1$), to the one input of which is supplied the output signal of the current sensor ($F_1$) and to the other input of which is supplied the deviation ($U_V$) of the output direct voltage ($U_A$), and the output of which is connected to a reset input of the flip-flop (FF).

5. Flyback converter according to claim 3, characterised in that the trigger circuit has a current comparator ($K_I$), to the one input of which is supplied a reference signal ($U_{IR}$), which represents a maximum current ($I_{Pmax}$), and to the other input of which is supplied the output signal of the current sensor ($F_1$), and the output of which is connected to a first reset input of the flip-flop (FF), and in that the trigger circuit further has a voltage comparator ($K_U$), to the one input of which is supplied the output signal of a saw-tooth generator (SZ), which output signal has the clock frequency (f), to the other input of which is supplied the deviation of the output direct voltage ($U_A$), and the output of which is connected to a second reset input of the flip-flop (FF).

6. Flyback converter according to claims 1, 3 and 4, characterised in that at least the flip-flop (FF) and the comparator ($K_1$) as well as a controlled oscillator (OSC) are contained in an integrated circuit (IC) of the type UC 3844 (Unitrode) or of an equivalent type, with the control input (pin 4) of the oscillator on the one hand being supplied with the output direct voltage ($U_A$), or the voltage ($U_f$) proportional thereto, of the auxiliary winding ($L_H$) by way of a resistor ($R_4$), and on the other hand being connected to earth by way of a capacitor ($C_3$).

## Revendications

1. Convertisseur à accumulation, comportant un transformateur ($T_r$), qui comporte un enroulement primaire ($L_P$) et au moins un enroulement secondaire ($L_S$), comportant

   a) un interrupteur (S) qui est commandé par un circuit de commande (FF, $K_1$) et par l'intermédiaire duquel l'enroulement primaire ($L_P$) se trouve à une tension continue d'entrée ($U_E$),

b) un redresseur ($D_1$) branché du côté aval de l'enroulement secondaire ($L_S$) et un condensateur de lissage ($C_1$), pour produire une tension continue de sortie ($U_A$),

c) un détecteur de courant ($F_1$) pour le courant primaire ($I_P$) passant par l'enroulement primaire ($L_P$), le rapport d'impulsions du signal de commande de l'interrupteur commandé (S) dépendant d'une part de l'écart de réglage ($U_V$) de la tension continue de sortie ($U_A$) par rapport à une valeur de consigne ($U_{Asoll}$) et d'autre part du signal de sortie du détecteur de courant ($F_1$), et

d) une valeur maximale ($I_{pmax}$) est fixée pour la valeur de consigne du courant primaire ($I_P$), valeur jusqu'à laquelle une régulation de la tension continue de sortie ($U_A$) s'effectue, et

e) le circuit de commande (FF, $K_1$) comporte un convertisseur tension-fréquence (W), qui reçoit une tension proportionnelle à la tension continue de sortie ($U_A$), de telle sorte que, lorsque la valeur maximale ($I_{pmax}$) du courant primaire ($I_P$) est atteinte et lorsque la charge continue à augmenter, la fréquence de cadence (f) du signal de commande de l'interrupteur commandé (S) soit réduite de manière directement proportionnelle à la tension continue de sortie ($U_A$).

2. Convertisseur à accumulation selon la revendication 1, caractérisé par le fait que, pour obtenir une tension proportionnelle à la tension continue de sortie ($U_A$), le transformateur ($T_r$) comporte un enroulement auxiliaire ($L_H$) du côté aval duquel sont branchés un redresseur ($D_3$) et un condensateur ($C_2$).

3. Convertisseur à accumulation selon la revendication 1 ou 2, caractérisé par le fait que le circuit de commande comporte une bascule bistable (FF) qui est branchée du côté amont de l'interrupteur commandé (S) et dont l'entrée set est reliée à la sortie du convertisseur tension-fréquence (W).

4. Convertisseur à accumulation selon la revendication 3, caractérisé par le fait que le circuit de commande comporte un amplificateur opérationnel ($K_1$), dont une entrée reçoit le signal de sortie du détecteur de courant ($F_1$), dont l'autre entrée reçoit l'écart de réglage ($U_V$) de la tension continue de sortie ($U_A$) et dont la sortie est reliée à une entrée reset de la bascule bistable (FF).

5. Convertisseur à accumulation selon la revendication 3, caractérisé par le fait que le circuit de commande comporte un comparateur de courant ($K_I$), dont une entrée reçoit un signal de référence ($U_{IR}$) représentant un courant maximal ($I_{pmax}$), dont l'autre entrée reçoit le signal de sortie du détecteur de courant ($F_1$) et dont la sortie est reliée à une première entrée de reset de la bascule bistable (FF), et que le circuit de commande comporte aussi un comparateur de tension ($K_U$), dont une entrée reçoit le signal de sortie, ayant la fréquence de cadence (f), d'un générateur d'impulsions en dents de scie (SZ), dont l'autre entrée reçoit l'écart de réglage de la tension continue de sortie ($U_A$) et dont la sortie est reliée à une seconde entrée reset de la bascule bistable (FF).

6. Convertisseur à accumulation selon l'une des revendications 1, 3 et 4, caractérisé par le fait qu'au moins la bascule bistable (FF) et le comparateur ($K_1$) ainsi qu'un oscillateur commandé (OSC) sont contenus dans un circuit intégré (IC) du type UC 3844 (Unitrode) ou d'un type équivalent, l'entrée de commande (broche 4) de l'oscillateur se trouvant d'une part par l'intermédiaire d'une résistance ($R_4$) à la tension continue de sortie ($U_A$) ou à la tension ($U_f$), proportionnelle à la précédente, de l'enroulement auxiliaire ($L_H$) et étant branchée d'autre part à la masse par l'intermédiaire d'un condensateur ($C_3$).

Fig.1 (Stand der Technik)

Fig.2

Fig. 3

Fig. 5

Fig. 4a

Fig. 4b

Fig. 4c

**FIG 6**

EP 0 721 692 B1

FIG. 7